# EUROPÄISCHE PATENTSCHRIFT

(11) **EP 0 401 720 B1**
(45) Veröffentlichungstag und Bekanntmachung des Hinweises auf die Patenterteilung: **25.08.1993**
(21) Anmeldenummer: 90110528.8
(22) Anmeldetag: 02.06.1990
(51) Int. Cl.: B23Q 3/157

(54) **Einrichtung zur Aufnahme eines Werkzeugspindelträgers an einer Antriebseinheit**
Device for receiving one tool spindle bearer for a driving apparatus
Dispositif pour loger un support de broche d'outil sur une unité d'entraînement

(30) Priorität: 09.06.1989 DE 3918903
(43) Veröffentlichungstag der Anmeldung: 12.12.1990
(73) Patentinhaber: Gebr. Heller Maschinenfabrik GmbH, D-72622 Nürtingen (DE)
(72) Erfinder: Schweizer, Ernst, D-7440 Nürtingen (DE); Kalestra, Horst, D-7441 Neckartenzlingen (DE)
(74) Vertreter: Jackisch-Kohl, Anna-Katharina

(56) Entgegenhaltungen:
- DD-A- 239 748
- DE-A- 2 233 657
- DE-A- 2 526 902
- DE-A- 2 835 965
- DE-A- 3 527 105
- DE-C- 2 739 810

## Beschreibung

Die Erfindung betrifft eine Einrichtung zur Aufnahme eines Werkzeugspindelträgers an einer Antriebseinheit nach dem Oberbegriff des Anspruches 1.

Bei einer bekannten Einrichtung dieser Art (DE-C-27 39 810) wird der Werkzeugspindelträger mit den Spannelementen und dem als Indexbolzen ausgebildeten Zentrierteil an der Antriebseinheit verspannt, die Bestandteil einer Bearbeitungsstation ist. Zunächst wird der Indexstift mittels eines Hydrozylinders in der Bearbeitungsstation nach außen in eine Ausnehmung des Werkzeugspindelträgers gefahren. Dadurch wird der Werkzeugspindelträger zunächst in horizontaler Richtung auf der Bearbeitungsstation positioniert. Anschließend werden in einem zweiten Schritt die Spannelemente betätigt, wodurch der Werkzeugspindelträger fest gegen die Antriebseinheit gespannt wird. Da für das Zentrieren und das Spannen des Werkzeugspindelträgers unterschiedliche Einrichtungen erforderlich sind, hat diese Einrichtung einen konstruktiv aufwendigen Aufbau. Der Indexbolzen muß, damit er den Werkzeugspindelträger einwandfrei positionieren kann, eine besonders aufwendige Formgebung haben, der zudem die Formgebung der Ausnehmung im Werkzeugspindelträger exakt entsprechen muß.

Der Erfindung liegt die Aufgabe zugrunde, die gattungsgemäße Einrichtung so auszubilden, daß sie bei konstruktiv einfacher Ausbildung und mit nur wenigen Teilen eine hochgenaue Positionierung und Verspannung des Werkzeugspindelträgers an der Antriebseinheit ermöglicht.

Diese Aufgabe wird bei der gattungsgemäßen Einrichtung erfindungsgemäß mit den kennzeichnenden Merkmalen des Anspruches 1 gelöst.

Bei der erfindungsgemäßen Einrichtung wird in einem einzigen Schritt zentriert und gespannt, weil die Spann- und Zentrierflächen an den Spannelementen vorgesehen sind. Beim Anziehen der Spannelemente wird nicht nur die Spannkraft aufgebracht, sondern über die Spann- und Zentrierfläche wird im Zusammenwirken mit der Kegelmantelfläche des Werkzeugträgers eine hochgenaue Positionierung und Zentrierung des Werkzeugspindelträgers an der Antriebseinheit erreicht. Da zur Zentrierung des Werkzeugspindelträgers an der Antriebseinheit keine zusätzlichen Bauteile notwendig sind, zeichnet sich die erfindungsgemäße Einrichtung durch einen konstruktiv einfachen Aufbau aus. Die Spannelemente selbst haben infolge der kegeligen Ausbildung der Spann- und Zentrierfläche keine aufwendige Gestaltung. Die erfindungsgemäße Einrichtung erlaubt bei einem einfachen Spann- und Zentriervorgang eine hohe Wiederholgenauigkeit.

Weitere Merkmale der Erfindung ergeben sich aus den weiteren Ansprüchen, der Beschreibung und den Zeichnungen.

Die Erfindung wird anhand zweier in den Zeichnungen dargestellter Ausführungsbeispiele näher erläutert. Es zeigen:
- Fig. 1: in Stirnansicht eine Bearbeitungsmaschine mit einer erfindungsgemäßen Einrichtung zur Aufnahme eines Werkzeugspindelträgers an einer Werkzeugspindelträger-Wechseleinrichtung,
- Fig. 2: die Maschine gemäß Fig. 1 in Seitenansicht,
- Fig. 3 und 4: in Darstellungen entsprechend den Fig. 1 und 2 eine zweite Ausführungsform einer Maschine mit einer erfindungsgemäßen Einrichtung,
- Fig. 5: in vergrößerter Darstellung und im Schnitt den Spann- und Zentrierbereich zwischen einem Werkzeugspindelträger und einer Antriebseinheit der erfindungsgemäßen Einrichtung,
- Fig. 6: eine Ansicht in Richtung des Pfeiles VI in Fig. 5, in der ein Spannteil der erfindungsgemäßen Einrichtung eine Einfahrstellung einnimmt,
- Fig. 7: eine Darstellung entsprechend Fig. 6, bei der der Spannteil jedoch seine Spannstellung einnimmt,
- Fig. 8: eine Seitenansicht der Antriebseinheit mit angekuppeltem Werkzeugspindelträger,
- Fig. 9: eine Ansicht in Richtung des Pfeiles IX in Fig. 8, jedoch ohne den Werkzeugspindelträger, wobei die Spannteile ihrer Spannstellung einnehmen,
- Fig. 10: eine Darstellung entsprechend Fig. 9, wobei jedoch die Spannteile ihre Einfahrstellung einnehmen.

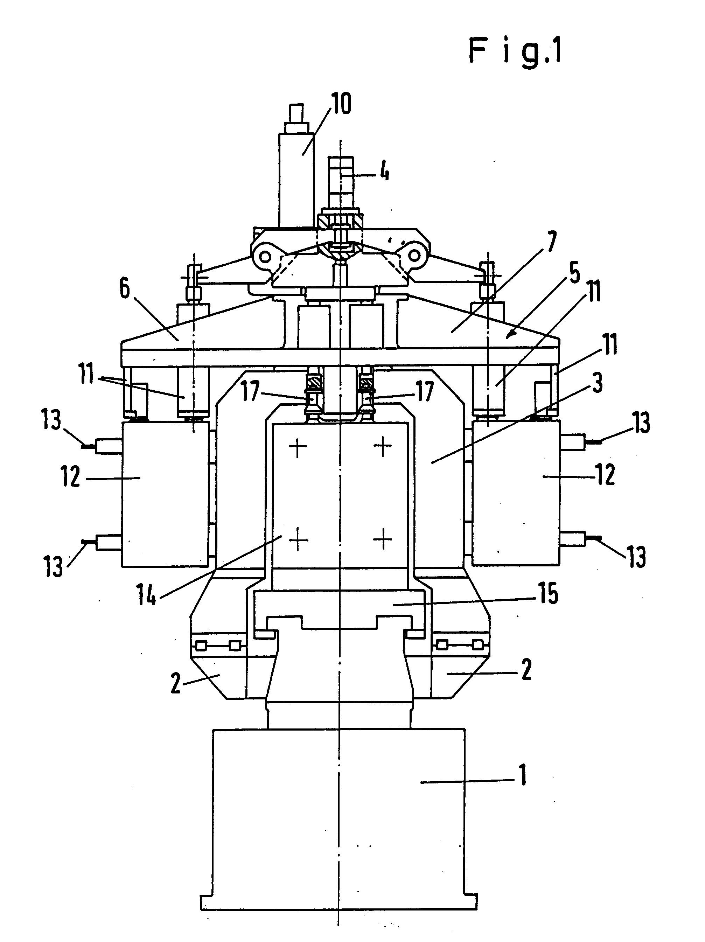

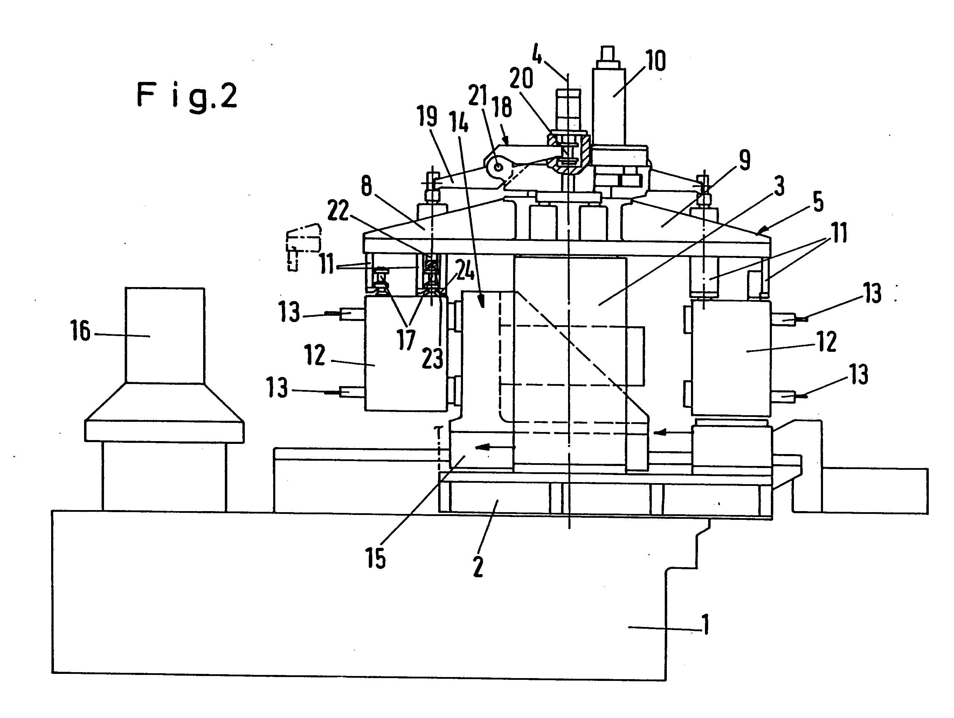

Die Maschine nach den Fig. 1 und 2 hat ein Maschinenbett 1 mit einer Schiebeführung 2 für einen Torständer 3. Auf ihm ist um eine Achse 4 drehbar ein Werkzeugspindelträgermagazin 5 gelagert. Es hat im Ausführungsbeispiel vier senkrecht zueinander liegende Arme 6 bis 9, die jeweils aus zwei mit Abstand und parallel nebeneinander liegenden Armteilen bestehen. Zum Drehen des Werkzeugspindelträgermagazins 5 ist ein Drehantrieb 10 vorgesehen, der ebenfalls auf dem Torständer 3 angeordnet ist. An der Unterseite der Arme 6 bis 9 sind Greifer 11 vorgesehen, mit denen Werkzeugspindelträger 12 gehalten werden können. An ihnen sind ein oder mehrere, im Ausführungsbeispiel vier Werkzeuge 13 gelagert.

Auf dem Maschinenbett 1 ist eine Antriebseinheit 14 parallel zum Torständer 3 verschiebbar gelagert. Die Antriebseinheit 14 ist auf einer Schlitteneinheit 15 angeordnet, die sich zwischen dem Torständer 3 hindurch erstreckt. Mit der Antriebseinheit 14 wird jeweils einer der Werkzeugspindelträger 12 gekuppelt, so daß dessen Werkzeuge 13 drehbar angetrieben werden können. Wie Fig. 2 zeigt, ist die Antriebseinheit 14 mit dem dem zu bearbeitenden Werkstück 16 gegenüberliegenden Werkzeugspindelträger 12 gekuppelt. Dieser Werkzeugspindelträger 12 hängt noch an den entsprechenden Greifern des Werkzeugspindelträgermagazins 5. Die Greifer 11 sind so ausgebildet, daß durch Vorfahren der Antriebseinheit 14 der mit ihm gekuppelte Werkzeugspindelträger 12 vom Werkzeugspindelträgermagazin 5 gelöst wird. An den übrigen Greifern 11 des Werkzeugspindelträgermagazins 5 hängen die anderen Werkzeugspindelträger 12. Mit den Werkzeugen 13 des vorgefahrenen Werkzeugspindelträgers 12 wird das Werkstück 16 bearbeitet. Anschließend wird die Antriebseinheit 14 und damit der Werkzeugspindelträger 12 zurückgefahren. Dabei gelangen am Werkzeugspindelträger 12 vorgesehene Halterungsstücke 17 in Eingriff mit den Greifern 11 des Armes 8. In der in Fig. 2 dargestellten Lage des Werkzeugspindelträgers 12 wird die Kupplung zwischen ihm und der Antriebseinheit 14 gelöst und die Antriebseinheit weiter zwischen dem Torständer 3 zurückgefahren, so daß sie vollständig frei vom Werkzeugspindelträger 12 kommt. Während des Lösevorgangs der Kupplung wird der Werkzeugspindelträger 12 in den Greifern 11 festgespannt und zentriert. Hierzu ist eine Zentrier- und Spanneinrichtung 18 auf dem Torträger 3 vorgesehen. Sie hat einen zweiarmigen Hebel 19, an dessen einem Ende ein Betätigungskolben 20 angreift. Mit ihm kann der Hebel 19 um die Achse 21 geschwenkt werden. Der andere Arm des Hebels 19 wirkt mit einem Spannkolben 22 zusammen. Wird der Hebel 19 durch Betätigen des Kolbens 20 entgegen dem Uhrzeigersinn um die Achse 21 geschwenkt, wird der Spannkolben 22 nach unten gedrückt, wobei ein Spann- und Zentrierglied 23 an seinem unteren Ende auf das Halterungsstück 17 drückt. Auf diese Weise wird der Werkzeugspindelträger 12 sicher mit seinen Halterungsstücken 17 in den Greifern 11 gehalten. Anschließend wird mit dem Drehantrieb 10 das Werkzeugspindelträgermagazin 5 um die Achse 4 gedreht, so daß ein anderer Werkzeugspindelträger 12 vor die Antriebseinheit 14 gebracht werden kann. Dann kann die Antriebseinheit 14 wieder mit diesem Werkzeugspindelträger 12 gekuppelt werden. Zum Bearbeiten des Werkstückes 16 wird dann in der beschriebenen Weise die Antriebseinheit 14 mit dem angekuppelten Werkzeug-
dem angekuppelten Werkzeugspindelträger 12 gegenüber dem Werkzeugspindelträgermagazin 5 in Richtung auf das Werkstück 16 verschoben.

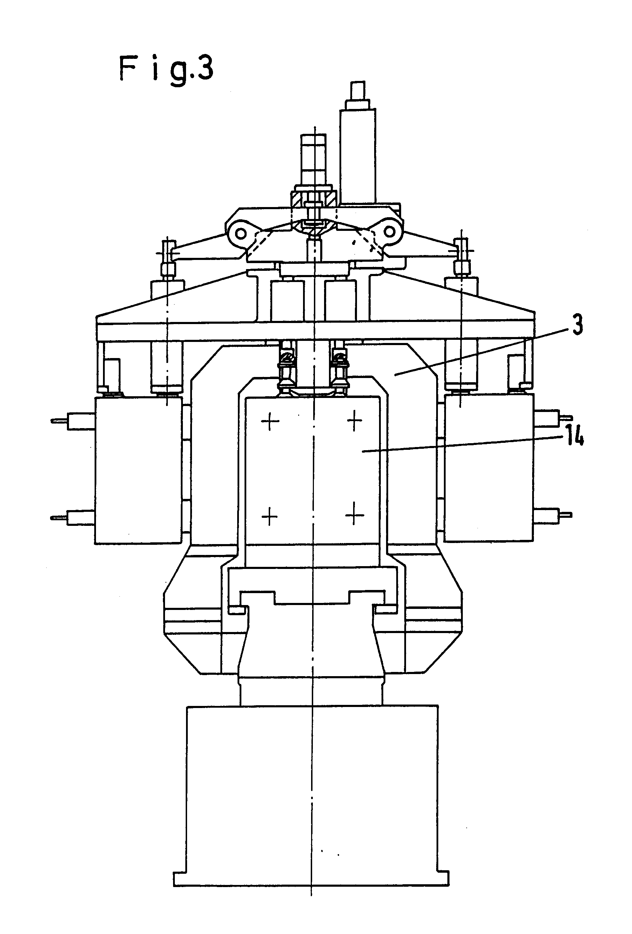

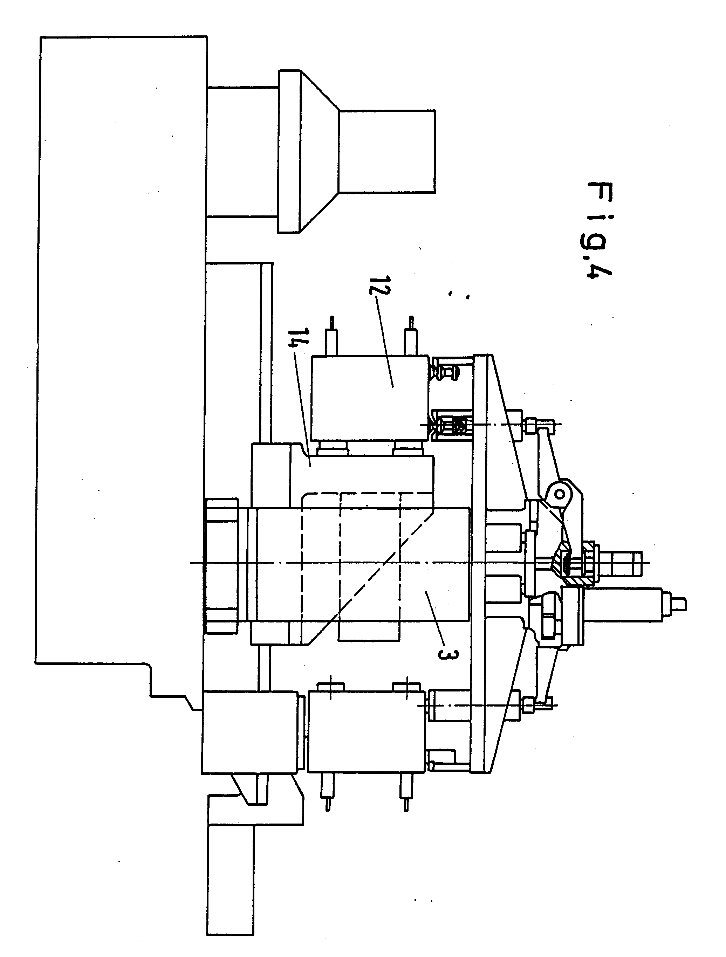

Die Ausführungsform gemäß den Fig. 3 und 4 entspricht im wesentlichen dem Ausführungsbeispiel nach den Fig. 1 und 2. Der einzige Unterschied besteht darin, daß der Torständer 3 und damit das Werkzeugspindelträgermagazin 5 unverschiebbar an der Maschine vorgesehen sind. Im übrigen arbeitet aber diese Maschine gleich wie das vorherige Ausführungsbeispiel. Da der Torständer 3 nicht verschiebbar ist, zeichnet sich diese Maschine durch einen konstruktiv einfacheren Aufbau aus. Die Ausführungsform nach den Fig. 1 und 2 hat den Vorteil, daß der Torständer 3 zusammen mit dem Werkzeugspindelträgermagazin 5 in Richtung auf das zu bearbeitende Werkstück 16 verschoben werden kann (strichpunktierte Linien in Fig. 2). Die Span-zu-Span-Zeiten können sehr gering gehalten werden, weil die Werkstückträger-Wechselpostion in Abhängigkeit zur Länge der Werkzeuge auf den kürzesten Abstand zu dem zu bearbeitenden Werkstück eingestellt werden kann. Die Antriebseinheit 14 muß darum nur sehr geringe Wege zurücklegen, um den jeweiligen Werkzeugspindelträger 12 in die Arbeitsposition zu verstellen.

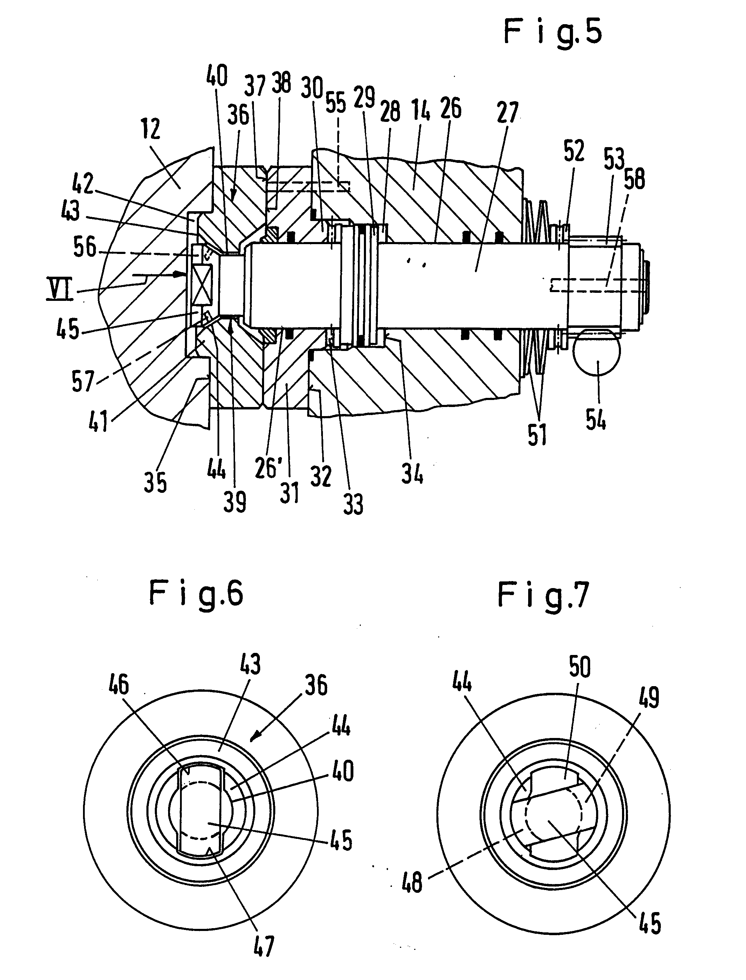

In den Fig. 1 und 3 ist der auf der Antriebseinheit 14 sitzende Träger weggelassen, so daß die Stirnseite der Antriebseinheit 14 erkennbar ist. Durch die Kreuze sind die vier Kupplungsstellen gekennzeichnet, über welche der jeweilige Werkzeugspindelträger 12 mit der Antriebseinheit 14 gekuppelt wird. Diese Kupplungsstellen sind gleich ausgebildet. Ihre konstruktive Gestaltung soll anhand der Fig. 5 bis 10 näher erläutert werden.

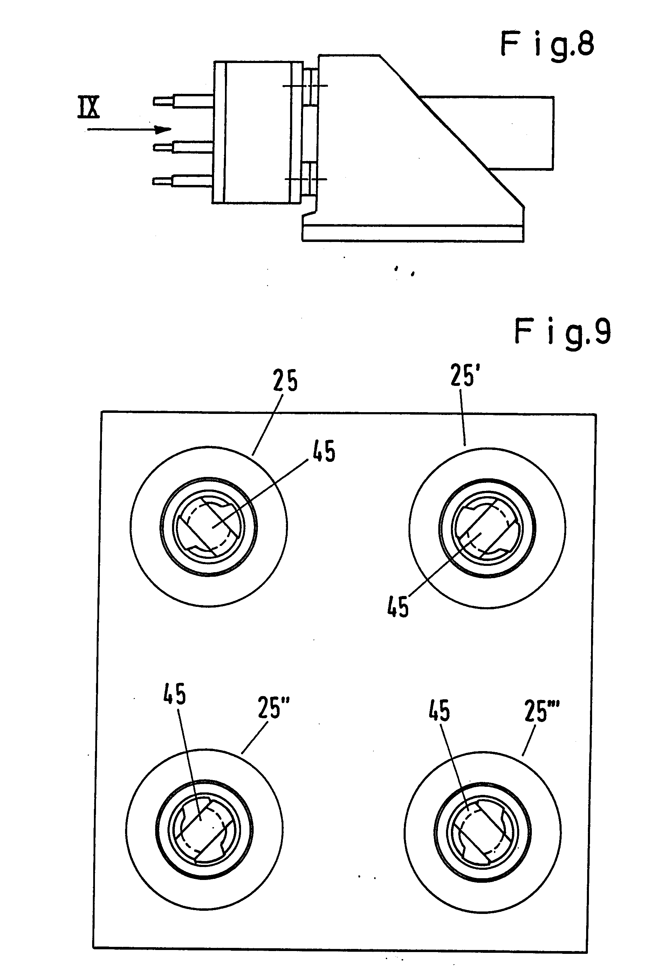

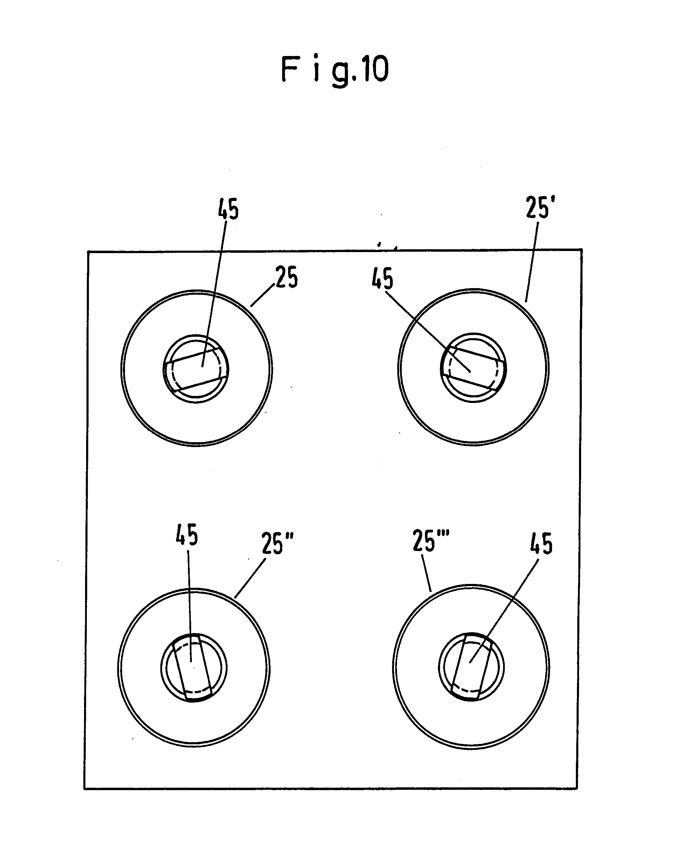

Wie die Fig. 9 und 10 zeigen, sind an der Kupplungsseite der Antriebseinheit 14 vier solcher Kupplungsstellen 25, 25', 25'', 25''' vorgesehen. Die Kupplungsstellen sind mit Abstand auf gleicher Höhe nebeneinander und übereinander angeordnet. Im Bereich jeder Kupplungsstelle ist die Antriebseinheit 14 mit einer Bohrung 26, 26' versehen (Fig. 5), durch die axial verschiebbar ein Spannbolzen 27 ragt. Die Bohrung 26, 26' ist an ihrem dem Werkzeugspindelträger 12 zugewandten Ende verbreitert ausgebildet. In dieser Verbreiterung 28 liegt ein auf dem Spannbolzen 27 vorgesehener Kolben 29. In die Verbreiterung 28 ragt ein ringförmiger Vorsprung 30 einer Buchse 31. Die Buchse 31 liegt an der Stirnseite 32 der Antriebseinheit 14 an. Der Kolben 29 des Spannbolzens 27 kommt in der einen Endstellung (Fig. 5) am ringförmigen Vorsprung 30 der Buchse 31, vorzugsweise unter Zwischenlage eines Nadellagers 33, zur Anlage. In dieser Stellung hat der Kolben 29 Abstand vom Boden 34 der Verbreiterung 28.

Auf der der Antriebseinheit 14 zugewandten Stirnseite 35 des Werkzeugspindelträgers 12 sind in Höhe der Kupplungsstellen der Antriebseinheit Spannstücke 36 befestigt. Sie haben wie die Buchsen 31 vorzugsweise kreisförmigen Umriß und vorzugsweise auch gleichen Durchmesser wie sie. In der Kupplungsstellung liegen die Buchsen 31 und die Spannstücke 36 mit ihren einander zugewandten Stirnseiten 37 und 38 flächig aneinander. Das Spannstück 36 hat eine Durchtrittsöffnung 39 für den Spannbolzen 27. Die Durchtrittsöffnung 39 verbreitert sich sowohl in Richtung auf die Buchse 31 als auch in Richtung auf den Werkzeugspindelträger 12 von einem zylindrischen Mittelstück 40 aus konisch.

Das Spannstück 36 ragt mit einem zentrischen, ringförmigen Vorsprung 41 in eine Vertiefung 42 in der Stirnseite 35 des Werkzeugspindelträgers 12. Der Vorsprung 41 liegt über seinem Umfang an der Seitenwandung der Vertiefung 42 an. In die Stirnseite 43 des Vorsprunges 41 mündet die konische Erweiterung 44. In sie ragt in der Kupplungsstellung ein Spann- und Zentrierkopf 45 am freien Ende des Spannbolzens 27. Wie die Fig. 6 und 7 zeigen, hat dieser Spann- und Zentrierkopf 45 in Ansicht etwa rechteckförmigen Umriß mit abgerundeten Schmalseiten 46 und 47. Sie setzen sich in Richtung auf den Spannbolzen 27 in Kegelmantelflächenabschnitte 48 und 49 fort, die auf einem gemeinsamen gedachten Kegelmantel liegen. In der Kupplungsstellung liegen diese Abschnitte 48, 49 ganzflächig an der Wandung der konischen Erweiterung 44 an.

Damit der Spann- und Zentrierkopf durch die Durchtrittsöffnung 39 des Spannstückes 36 geschoben werden kann, ist die Durchtrittsöffnung mit einem dem Umriß des Spann- und Zentrierkopfes 45 entsprechenden Ausschnitt 50 versehen, der so ausgebildet ist, daß der Spann- und Zentrierkopf 45 mit geringem Spiel durch diesen Ausschnitt 50 geschoben werden kann (Fig. 6).

Der Spannbolzen 27 ist in Richtung auf seine Spannstellung federbelastet. Im Ausführungsbeispiel sitzen auf dem Spannbolzen 27 Tellerfedern 51, die sich an der Antriebseinheit 14 sowie einem Widerlager 52 des Spannbolzens 27 abstützen. Die Tellerfedern 51 dienen zur Halterung des Werkzeugspindelträgers 12 bei einem evtl. Hydraulikausfall. Wie Fig. 5 zeigt, sitzen die Tellerfedern 51 auf dem vom Spann- und Zentrierkopf 45 abgewandten Ende des Spannbolzens 27. Dieses Spannbolzenende ist als Ritzel 53 ausgebildet, über das der Spannbolzen mit einem geeigneten Antrieb 54 gedreht werden kann.

Sämtliche Spannbolzen 27 der Antriebseinheit 14 sind zum Ankuppeln des jeweiligen Werkzeugspindelträgers 12 so gegenüber den Durchtrittsöffnungen 39 des Werkzeugspindelträgers ausgerichtet, daß die Spann- und Zentrierköpfe 45 der Spannbolzen 27 mit geringem Spiel durch die Ausschnitte 50 der Durchtrittsöffnungen 39 gesteckt werden können. Diese Einfahrstellung ist in Fig. 10 dargestellt. Die Spann- und Zentrierköpfe 45 sämtlicher Spannbolzen 27 können parallel zueinander angeordnet sein. Im dargestellten Ausführungsbeispiel nehmen jedoch die vorzugsweise vier Köpfe 45 in der Einfahrstellung jeweils unterschiedliche Lagen zueinander ein. Sobald die Antriebseinheit 14 so weit gegen den Werkzeugspindelträger 12 gefahren worden ist, daß die Köpfe 45 die in Fig. 5 dargestellte Lage einnehmen, wird der Drehantrieb 54 eingeschaltet und damit sämtliche Spannbolzen 45 um ihre Achsen gedreht. Dadurch werden die Spann- und Zentrierköpfe 45 gegenüber den Ausschnitten 50 verdreht (Fig. 7), so daß die Spannbolzen 27 anschließend durch Hydraulikbeaufschlagung axial zurückgefahren werden können. Dabei legen sich die Kegelmantelabschnitte 48, 49 der Spann- und Zentrierköpfe 45 an die Wandung der konischen Erweiterungen 44 flächig an. Dadurch werden die Druckstücke 36 mit ihren Stirnseiten 37 fest gegen die Stirnseiten 38 der Buchsen 31 gedrückt. Über die Spann- und Zentrierköpfe 45 wird somit gleichzeitig die Spannung aufgebracht und eine Zentrierung erzielt. Dadurch kann in einem einzigen Vorgang der Werkzeugspindelträger 12 sicher an der Antriebseinheit 14 befestigt und gegenüber ihr ausgerichtet und zentriert werden. Da im Ausführungsbeispiel für den Werkzeugspindelträger 12 vier solcher Kupplungsstellen 25, 25', 25'', 25''' vorgesehen sind, kann der Werkzeugspindelträger gleichmäßig fest an die Antriebseinheit 14 angekuppelt werden. Die Achsen der die Spannelemente 27 aufnehmenden Bohrungen 26, 26' sind gegenüber den Achsen der Kegelmantelflächen 44 in gleicher Radialrichtung versetzt, etwa in der Größenordnung von wenigen 1/100 Millimetern. Dadurch wird das Bewegungsspiel der Spannelemente 27 in deren Führungsbohrungen beim Spann- und Zentriervorgang mit Sicherheit herausgedrückt. Dadurch wird eine Positionierwiederholgenauigkeit der Werkzeugspindelträger im µ-Bereich erreicht.

In die Stirnseite 38, die eine Spannfläche bildet, mündet wenigstens eine Zuleitung 55 für Druckluft, mit der die Anlagefläche 38 während des Spannvorganges von Schmutz und dgl. freigeblasen werden kann. Zusätzlich kann die Druckluft auch zur Kontrolle der ordnungsgemäßen Spannung des Werkzeugspindelträgers 12 herangezogen werden.

Vor dem Spannvorgang der Spannbolzen 27 können auch die Kegelmantelflächen der konischen Erweiterungen 44 zumindest im Auflagebereich der Spann- und Zentrierköpfe 45 bevorzugt gereinigt werden. Hierzu münden in die Kegelmantelflächen 48 und 49 der Spann- und Zentrierköpfe 45 Druckluftbohrungen 56 und 57 (Fig. 5), deren Mündungen gegen die Kegelmantelfläche der Erweiterungen 44 gerichtet ist. Diese Druckluftbohrungen 56, 57 sind an eine zentrale Druckluftbohrung 58 im Spannbolzen 27 angeschlossen. Sobald die Antriebseinheit 14 an den Werkzeugspindelträger 12 herangefahren und die Spannbolzen 27 mit ihren Köpfen 45 eingefahren sind, wird Druckluft durch die Bohrungen 56 bis 58 geleitet, die dann auf die Kegelflächen der Erweiterungen 44 trifft und sie säubert. Dadurch ist gewährleistet, daß in der Kupplungsstellung die Köpfe 45 fest auf den Wandungen der Erweiterungen 44 aufliegen.

Fig. 9 zeigt die Spann- und Zentrierköpfe 45 in ihrer Spann- und Zentrierstellung.

Durch die hydraulische Betätigung der Spannbolzen 27 werden die Köpfe 45 in der beschriebenen Weise an die Kegelfläche der Erweiterungen 44 angelegt, wodurch der Spanndruck aufgebaut wird. Dadurch wird der Werkzeugspindelträger 12 in seine genaue Lage gebracht und gleichzeitig gespannt. Somit wird in einer einzigen Bewegung die Ausrichtung und die Spannung erreicht. Die Spannbolzen durchsetzen das zylindrische Mittelstück 40 mit Radialspiel, so daß beim Verspannen und Zentrieren der Werkzeugspindelträger 12 zuverlässig ausgerichtet und zentriert werden kann. Die beschriebene Einrichtung zeichnet sich durch wenige bewegte und einfache Teile aus.

Zum Spannen und Zentrieren des Werkzeugspindelträgers 12 reichen bereits zwei Spannbolzen 27 aus. Bei der dargestellten und beschriebenen Ausführungsform mit vier Spannbolzen 27 wird eine besonders genaue und einwandfreie Spannung und Zentrierung des Werkzeugspindelträgers 12 erreicht. Mit der beschriebenen Spannung und Zentrierung kann eine überraschend hohe Wiederholgenauigkeit erreicht werden. Infolge der Selbstzentrierung des Werkzeugspindelträgers 12 beim Ankuppeln und Verspannen muß der Werkzeugspindelträger nicht exakt gegenüber der Antriebseinheit 14 ausgerichtet werden. Die hochgenaue Positionierung des Werkzeugspindelträgers wird durch die Spannbolzen 27 erreicht, die nicht nur den Spanndruck erzeugen, sondern über die Kegelmantelabschnitte 48, 49 den Werkzeugspindelträger auch Positionieren. Diese Positionierung wird in jeder Lage des Werkzeugspindelträgers 12 erreicht, insbesondere auch in der in den Zeichnungen dargestellten Vertikallage.

Mit der Antriebseinheit 14 werden die Werkzeuge 13 des Werkzeugspindelträgers 12 in bekannter, nicht näher dargestellter Weise gekuppelt und drehbar angetrieben. Nach der Bearbeitung wird die Antriebseinheit 14 mit dem angekuppelten Werkzeugspindelträger 12 vom Werkstück 16 zurückgefahren, wobei in der eingangs beschriebenen Weise der Werkzeugspindelträger 12 mit seinen Halterungsstücken 17 von den Greifern 11 des Werkzeugspindelträgermagazins 5 aufgenommen wird. In dieser Lage bleibt die Antriebseinheit 14 stehen. Nunmehr werden die Spannbolzen 27 wieder vorgefahren, so daß die Spannung aufgehoben wird. In der vorgefahrenen Lage werden die Spannbolzen 27 wieder mittels des Drehantriebes 54, der beispielsweise eine Zahnstange sein kann, zurückgedreht, so daß die Spann- und Zentrierköpfe 45 wieder fluchtend zu den Ausschnitten 50 der Durchtrittsöffnungen 39 der Spannstücke 36 liegen. Dann fährt die Antriebseinheit 14 so weit zurück, bis die Spannbolzen von den Spannstücken 36 freikommen. Das Werkzeugspindelträgermagazin 5 kann nun um die Achse 4 gedreht werden, um einen anderen Werkzeugträger vor die Antriebseinheit 14 zu bringen. Er kann nun in der beschriebenen Weise wieder mit der Antriebseinheit 14 gekuppelt werden.

## Patentansprüche

1. Einrichtung zur Aufnahme eines Werkzeugspindelträgers an einer Antriebseinheit (14), die mindestens zwei Spannelemente (27) mit Köpfen (45) aufweist, mit denen der Werkzeugspindelträger (12) an einer vertikalen Anlagefläche der Antriebseinheit (14) verspannbar ist, und mit wenigstens einem Zentrierteil, mit dem der Werkzeugspindelträger (12) gegenüber der Antriebseinheit (14) zentrierbar ist, dadurch gekennzeichnet, daß der Zentrierteil Bestandteil der Spannelemente (27) ist, deren Kopf (45) mindestens eine auf einem Kegelmantel liegende Spann- und Zentrierfläche (48, 49) als Zentrierteil aufweist, die mit mindestens einer Kegelmantelfläche (44) des Werkzeugspindelträgers (12) zusammenwirkt.

2. Einrichtung nach Anspruch 1,
dadurch gekennzeichnet, daß der Kopf (45) des Spannelementes (27) unrunden Umriß hat.

3. Einrichtung nach Anspruch 2,
dadurch gekennzeichnet, daß die Kegelmantelfläche (44) die Wandung einer konischen Erweiterung einer Durchtrittsöffnung (39) für das Spannelement (27) ist.

4. Einrichtung nach Anspruch 3,
dadurch gekennzeichnet, daß die Durchtrittsöffnung (39) einen dem Umriß des Kopfes (45) des Spannelementes (27) angepaßten Ausschnitt (50) für den Durchtritt des Kopfes aufweist.

5. Einrichtung nach einem der Ansprüche 1 bis 4,
dadurch gekennzeichnet, daß das Spannelement (27) um seine Achse drehbar ist.

6. Einrichtung nach Anspruch 5,
dadurch gekennzeichnet, daß das Spannelement (27) ein Ritzel (53) aufweist, in das ein Getriebeteil (54), vorzugsweise eine Zahnstange, eingreift.

7. Einrichtung nach einem der Ansprüche 2 bis 6,
dadurch gekennzeichnet, daß der Kopf (45) des Spannelementes (27) etwa rechteckigen Umriß mit abgerundeten Schmalseiten (46, 47) hat, und daß sich die Spann- und Zentrierflächen (48, 49) an der Unterseite des Kopfes (45) von den Schmalseiten (46, 47) aus erstrecken.

8. Einrichtung nach einem der Ansprüche 1 bis 7,
dadurch gekennzeichnet, daß das Spannelement (27) hydraulisch verschiebbar ist.

9. Einrichtung nach einem der Ansprüche 1 bis 8,
dadurch gekennzeichnet, daß das Spannelement (27) in Richtung auf seine Spannstellung federbelastet ist, vorzugsweise durch Tellerfedern (51).

10. Einrichtung nach einem der Ansprüche 1 bis 9,
dadurch gekennzeichnet, daß das Spannelement (27) durch eine an der Antriebseinheit (14) befestigte Buchse (31) ragt.

11. Einrichtung nach einem der Ansprüche 1 bis 10,
dadurch gekennzeichnet, daß die Kegelmantelfläche (44) an einem Spannstück (36) vorgesehen ist, das am Werkzeugspindelträger (12) befestigt ist.

12. Einrichtung nach Anspruch 10 oder 11,
dadurch gekennzeichnet, daß in der Spannstellung die Buchse (31) und das Spannstück (36) mit ihren Stirnseiten (37, 38) aneinanderliegen.

13. Einrichtung nach einem der Ansprüche 10 bis 12,
dadurch gekennzeichnet, daß in die Stirnseite (38) der Buchse (31) mindestens eine Druckluftbohrung (55) mündet.

14. Einrichtung nach einem der Ansprüche 1 bis 13,
dadurch gekennzeichnet, daß das Spannelement (27) die Durchtrittsöffnung (39) mit geringem Spiel durchsetzt.

15. Einrichtung nach einem der Ansprüche 1 bis 14,
dadurch gekennzeichnet, daß das Spannelement (27) von mindestens einer Bohrung (56 bis 58) durchsetzt ist, die in die Spann- und Zentrierfläche (48, 49) mündet.

16. Einrichtung nach einem der Ansprüche 1 bis 15,
dadurch gekennzeichnet, daß an der Antriebseinheit (14) vier Spannelemente (27) vorgesehen sind.

17. Einrichtung nach einem der Ansprüche 1 bis 16,
dadurch gekennzeichnet, daß die Achsen der die Spannelemente (27) aufnehmenden Bohrungen (26, 26') gegenüber den Achsen der Kegelmantelflächen (44) in gleicher Radialrichtung versetzt sind.

18. Einrichtung nach einem der Ansprüche 1 bis 17,
dadurch gekennzeichnet, daß der Werkzeugspindelträger (12) an einem Werkzeugspindelträgerwechselmagazin (5) einer Bearbeitungseinheit aufhängbar ist.

19. Einrichtung nach Anspruch 18,
dadurch gekennzeichnet, daß die Antriebseinheit (14) auf der Bearbeitungseinheit verfahrbar ist.

## Claims

1. Device for receiving a tool spindle bearer on a driving unit (14), which comprises at least two clamping members (27) with heads (45), by which the tool spindle bearer (12) can be clamped against a vertical contact surface of the driving unit (14), and with at least one centering part, by which the tool spindle bearer (12) can be centered with respect to the driving unit (14), characterised in that the centering part is a component of the clamping members (27), whereof the head (45) comprises at least one clamping and centering surface (48, 49), located on a cone-shaped shell, as the centering part, which cooperates with at least one cone-shaped surface (44) of the tool spindle bearer (12).

2. Device according to Claim 1, characterised in that the head (45) of the clamping member (27) has a non-circular contour.

3. Device according to Claim 2, characterised in that the cone-shaped surface (44) is the wall of a conical enlargement of an opening (39) for the clamping member (27).

4. Device according to Claim 3, characterised in that the opening (39) has a cut-out (50) for the passage of the head, which cut-out is adapted to the contour of the head (45) of the clamping member (27).

5. Device according to one of Claims 1 to 4, characterised in that the clamping member (27) is able to rotate about its axis.

6. Device according to Claim 5, characterised in that the clamping member (27) is a pinion (53), in which a geared part (54), preferably a rack, engages.

7. Device according to one of Claims 2 to 6, characterised in that the head (45) of the clamping member (27) has an approximately rectangular contour with rounded narrow sides (46, 47), and that the clamping and centering surfaces (48, 49) on the under side of the head (45) extend out from the narrow sides (46, 47).

8. Device according to one of Claims 1 to 7, characterised in that the clamping member (27) is hydraulically displaceable.

9. Device according to one of Claims 1 to 8, characterised in that the clamping member (27) is spring-loaded in the direction of its clamping position, preferably by cup springs (51).

10. Device according to one of Claims 1 to 9, characterised in that the clamping member (27) projects through a bush (31) fastened to the driving unit (14).

11. Device according to one of Claims 1 to 10, characterised in that the cone-shaped surface (44) is provided on a clamping member (36), which is fastened to the tool spindle bearer (12).

12. Device according to Claim 10 or 11, characterised in that in the clamping position, the bush (31) and the clamping member (36) lie one against the other by their end faces (37, 38).

13. Device according to one of Claims 10 to 12, characterised in that at least one compressed air bore (55) opens into the end face (38) of the bush (31).

14. Device according to one of Claims 1 to 13, characterised in that the clamping member (27) penetrates the opening (39) with little clearance.

15. Device according to one of Claims 1 to 14, characterised in that the clamping member (27) is penetrated by at least one bore (56 to 58), which opens into the clamping and centering surface (48, 49).

16. Device according to one of Claims 1 to 15, characterised in that four clamping members (27) are provided on the driving unit (14).

17. Device according to one of Claims 1 to 16, characterised in that the axes of the bores (26, 26') receiving the clamping members (27) are offset in the same radial direction with respect to the axes of the cone-shaped surfaces (44).

18. Device according to one of Claims 1 to 17, characterised in that the tool spindle bearer (12) can be suspended from a tool spindle bearer changing magazine (5) of a machining unit.

19. Device according to Claim 18, characterised in that the driving unit (14) is able to travel on the machining unit.

## Revendications

1. Dispositif pour monter un support de broche d'outil sur une unité d'entraînement (14) équipée d'au moins deux éléments de serrage (27) avec têtes (45) à l'aide desquels le support de broche d'outil (12) peut être bloqué sur une surface d'appui verticale de l'unité d'entraînement (14), et d'au moins un élément de centrage à l'aide duquel le support de broche d'outil (12) peut être centré par rapport à l'unité d'entraînement (14), **caractérisé en ce** que l'élément de centrage fait partie des éléments de serrage (27) dont la tête (45) comporte comme élément de centrage au moins une surface de serrage et de centrage (48, 49) située sur une aire latérale de cône, qui coopère avec au moins une surface latérale de cône (44) du support de broche d'outil (12).

2. Dispositif selon la revendication 1, caractérisé en ce que la tête (45) de l'élément de serrage (27) présente un contour ovalisé.

3. Dispositif selon la revendication 2, caractérisé en ce que la surface latérale de cône (44) est la paroi d'un élargissement conique d'une ouverture de passage (39) pour l'élément de serrage (27).

4. Dispositif selon la revendication 3, caractérisé en ce que l'ouverture de passage (39) présente une découpure (50) pour le passage de la tête, qui est adaptée au contour de la tête (45) de l'élément de serrage (27).

5. Dispositif selon l'une des revendications 1 à 4, caractérisé en ce que l'élément de serrage (27) peut tourner autour de son axe.

6. Dispositif selon la revendication 5, caractérisé en ce que l'élément de serrage (27) comprend un pignon (53) dans lequel s'engage un élément d'engrenage (54), de préférence une crémaillère.

7. Dispositif selon l'une des revendications 2 à 6, caractérisé en ce que la tête (45) de l'élément de serrage (27) présente un contour sensiblement rectangulaire avec des petits côtés (46, 47) arrondis, et que les surfaces de serrage et de centrage (48, 49) s'étendent sur la face inférieure de la tête (45) en partant des petits côtés (46, 47).

8. Dispositif selon l'une des revendications 1 à 7, caractérisé en ce que l'élément de serrage (27) peut être déplacé hydrauliquement.

9. Dispositif selon l'une des revendications 1 à 8, caractérisé en ce que l'élément de serrage (27) est commandé par ressort en direction de sa position de serrage, de préférence par des rondelles-ressorts (51).

10. Dispositif selon l'une des revendications 1 à 9, caractérisé en ce que l'élément de serrage (27) s'étend au travers d'une douille (31) montée sur l'unité d'entraînement (14).

11. Dispositif selon l'une des revendications 1 à 10, caractérisé en ce que la surface latérale de cône (44) est prévue sur un tendeur ((36) qui est fixé sur le support de broche d'outil (12).

12. Dispositif selon l'une des revendications 10 ou 11, caractérisé en ce que dans la position de serrage, la douille (31) et le tendeur (36) sont appliqués l'un contre l'autre avec leurs faces frontales (37, 38).

13. Dispositif selon l'une des revendications 10 à 12, caractérisé en ce qu'au moins un conduit d'air comprimé (55) débouche dans la face frontale (38) de la douille (31).

14. Dispositif selon l'une des revendications 1 à 13, caractérisé en ce que l'élément de serrage (27) traverse avec un faible jeu l'ouverture de passage (39).

15. Dispositif selon l'une des revendications 1 à 14, caractérisé en ce que l'élément de serrage (27) est traversé par au moins un alésage (56 à 58) qui débouche dans la surface de serrage et de centrage (48, 49).

16. Dispositif selon l'une des revendications 1 à 15, caractérisé en ce que quatre éléments de serrage (27) sont prévus sur l'unité d'entraînement (14).

17. Dispositif selon l'une des revendications 1 à 16, caractérisé en ce que les axes des alésages (26, 26') recevant les éléments de serrage (27) peuvent être décalés dans la même direction radiale par rapport aux axes des surfaces latérales de cône (44).

18. Dispositif selon l'une des revendications 1 à 17, caractérisé en ce que le support de broche d'outil (12) peut être accroché sur un magasin changeur de supports de broches d'outil (5) d'une unité d'usinage.

19. Dispositif selon la revendication 18, caractérisé en ce que l'unité d'entraînement (14) peut être déplacée sur l'unité d'usinage.
